# EUROPEAN PATENT SPECIFICATION

(11) **EP 3 669 666 B1**
(45) Date of publication and mention of the grant of the patent: **07.12.2022**
(21) Application number: 19192340.8
(22) Date of filing: 19.08.2019
(51) Int. Cl.: A23L 7/126, A23P 10/25, A23P 20/10, A23P 30/20

(54) **THE WHOLE GRAIN CHIPS AND A METHOD FOR MANUFACTURING THEREOF**
VOLLKORNCHPS UND VERFAHREN ZUR HERSTELLUNG DAVON
PUCES DE GRAINS ENTIERS ET PROCÉDÉ DE FABRICATION ASSOCIÉ

(30) Priority: 18.12.2018 RU 2018144841
(43) Date of publication of application: 24.06.2020
(73) Proprietor: Otkrytoe aktsionernoe obshchestvo "Khlebprom", Chelyabinsk, Chelyabinskaya 454014 (RU)
(72) Inventor: KOVALCHUK, Tatyana Grigorevna, Smolenskaya obl. Yartsevskij r-n. g. Yartsevo 215800 (RU)
(74) Representative: Zimmermann, Tankred Klaus

(56) References cited:
- CA-A1- 2 346 964
- CN-A- 101 467 614
- RU-C1- 2 603 913
- US-B1- 8 541 044

## Description

### TECHNICAL FIELD

This group of inventions relates to a food product and a method for manufacturing thereof, in particular to manufacturing of a snack food product obtained by extruding and formed as chips, containing rice and corn grains, a natural flavouring additive with olive oil and rosemary, with cheese, with tomato and basil, with nacho cheese, with paprika and chili.

### PRIOR ART

A method of production of sweet grain breads is known from RU 2 603 913 C1 . The method comprises using a raw material composition of the following ingredients: whole wheat grains, at least one kind of cereal, a flavouring agent in the form of a syrup; preparing a grain mixture by purification from impurities and its subsequent moistening water; extruding the finished cereal mixture with simultaneous baking and briquetting; and spraying a flavouring syrup onto the surface of the briquette. The flavouring syrup contains fructose 24.5-75%; sucralose 0.03-1.0%; flavourant 0.8-4.5%; salt 0.07-4.0%; juice/mixture juices or extract of juice/mixture juices or honey - 1.0-3.0%.

A method for manufacturing of a snack product and a composition of the dough for manufacturing thereof are known from patent for an invention of the RF No. 2498623 published on 20.11.2003. The method for manufacturing of the snack product consists in manufacturing of the dough, for which a lot of visible particles of cereal grains are mixed with the dough based on rice flour, a mixture of inulin and surfactant is added to the dough, while the amount of the inulin content is from about 1% to about 10% by the weight of the dough, the amount of the surfactant content is from about 0.01% to about 4.0% by the weight of the dough, and the amount of the said visible particles content is from about 2% to about 40% by the weight of the dough, the resulting dough is rolled to obtain a dough sheet with the thickness of from about 100 microns to about 2000 microns, the dough sheet is cut into separate pieces and fried, or the separate dough pieces are baked to obtain a variety of crispy rice products with the visible inclusions. The invention allows, through the use of the mixture of inulin and surfactant, eliminating a relationship between the water content and adhesiveness and viscoelasticity of the dough, what allows using the water content for controlling other variables of the product, such as a moisture content in the product and oil absorption, and also, using this mixture eliminates warping and sticking of the dough, when it is processed by the dough flattening rollers for tortilla.

The snack chips manufactured from the dough, which contain the grinded buckwheat husk, which average particle size corresponds to the size at which the particles in the amount of less than 20% by the weight pass through a 60-mesh sieve of the USA standard, are known from patent for an invention of the RF No. 2414128 published on 20.03.2011. The dough for the snack chips and a method for manufacturing of the snack chips are also proposed. The method involves obtaining the grinded buckwheat husk and mixing it with the ingredients of the dough, rolling the dough to the thickness of from 0.015 inches to 0.25 inches and cutting the dough into separate pieces. The said dough pieces are exposed to a thermal treatment until the finished product moisture content reaches from 1 to 3% by the weight.

A device and a method for manufacturing of the figured snack food products are known from patent for an invention of the RF No. 2588539 published on 27.06.2016. In one of the embodiments of the invention, the method for manufacturing of a variety of the figured food products involves forming the semi-finished food products, moving the semi-finished products to the forming oven, which contains the conveyor containing at least one convex press-form, and drying the semi-finished products in the forming oven for the purpose of obtaining the figured semi-finished products. Each figured semi-finished product may have a wave-type or wavy shape. At least one spring is provided, which can contain many spiral springs or at least one spring wire mesh. In another embodiment of the invention, the step of forming involves rolling the dough and cutting it into semi-finished products. The dough may be at least one of the following: corn flour dough, potato flakes dough, and wheat flour dough. In another embodiment of the invention, the method additionally involves final drying the figured semi-finished products with the purpose of obtaining the figured snack chips. Final drying may involve at least one of the following: frying in hot oil, drying with hot air, vacuum drying, jet drying, drying with infrared radiation or drying with ultra high frequency currents.

Thus, the snack food products, such as the finished corn chips of a tortilla or nachos type, are the popular products among the consumers for which there is high demand. At manufacturing of the snack food product, at first, the starchy dough is rolled, and then it is cut into the pieces of a desired shape and exposed to the thermal treatment. The desired shape of the snack food product is often a square, a triangle or a circle. After the dough is cut into pieces, they are exposed to the thermal treatment (for example, they are fried, baked, or both), resulting in the reduction of the moisture content in them. The snack food products are kept and packaged.

In order to obtain such flattened or sheet food products (for example, the chips of a tortilla or nachos type), such device as a dough sheeting roller is widely used in the food industry during a continuous technology process. Usually, the dough semi-finished product is squeezed between a pair of the device rolls rotating in the opposite direction, which are located near to each other, thereby creating a pinch zone, by means of which the sheets from the dough are obtained. Then the dough can be cut, for example, on the cutting roll in order to give the products the desired shape.

Many dough semi-finished products, particularly the corn-based ones, do not enter the conveyor to be moved to the next step of processing, such as a baking oven, but they tend to stick to the rolls of the device. One of the common methods for overcoming this complexity is to tension an ejector wire along a front side of the roll of the device, so that the ejector wire could separate the dough semi-finished products from a surface of the roll. A cutting knife can also be used to remove the dough from the surface of the rolls.

One of the essential disadvantages of the composition of the above said snack products is the use of flour and starch from which the dough is manufactured.

Thus, the snack products manufactured from the flour, which is obtained according to the conventional technology after grinding the grain, are characterized by an insignificant content of fiber, minerals and vitamins.

In recent years, there has been a sharp increase in demand for natural food products in general, and, in particular, for natural snack food products. The nutrient-rich snack products could meet ideally the various requirements involving the restrictions to the content of fat, including saturated and trans-fatty acids, cholesterol, sodium, and addable sugar and salt.

The popularity of the snack products from the whole grain is growing. The whole grain is considered to be the grain containing the whole pith of the grain (the bran, the germ and endosperm), at the same time, it may be a corn grain, a rice grain, etc. A typical indicator for the consumer of the fact that the product contains the whole grains is the presence of the visible bran particles in the product.

However, manufacturing of the snack products from the whole grain with the use of conventional rolling the dough is complex, because the bran or pericarpium will accumulate on the wire or the cutting knife of the dough sheeting roller, resulting in that the dough will be removed unevenly from the rolls. Therefore, this invention discloses the method for manufacturing of the snack product by extruding.

In addition, it would be useful to obtain the snack food product with the whole rice and corn grains with distinguished natural flavouring additives.

Thus, there is a need for the nutrient-rich snack chips with a high content of the whole grains that do not contain the components harmful to the human health, which are manufactured from an easily formed and exposable to extruding moistened mixture of rice and corn grains, followed by an addition of various flavouring additives.

The said disadvantages of the above products and the methods for manufacturing thereof disclosed in the prior art are eliminated by improving the composition and the method for manufacturing of the whole grain chips disclosed in this invention.

CA 2 346 964 A1 discloses puffed-food starch material snack, in particular starch material from grains, having an improved crispy texture and a more aesthetic appearance. In general terms, the products are snack chips, cakes, crackers or the like, made from food starch material.

US 8 541 044 B1 discloses no-bake grain products with a toasted appearance and flavor and a method of providing a toasted appearance and flavor to a no-bake food product. The no-bake food product includes granola bars, clusters, cereal, instant hot cereal and snacks.

RU 2 603 913 C1 relates to the production of grain crisp bread. Raw material for producing crisp bread includes whole wheat grains, at least one type of cereal and flavouring additive in form of a syrup. Grain mixture is prepared by removing impurities and subsequent moistening with water. Ready grain mixture is extruded with simultaneous baking and briquetting. Spraying is used to apply on surface of briquette a flavour additive in form of a syrup. Syrup contains component in following ratio, wt%: fructose 24.5-75; sucralose 0.03-1.0; flavourant 0.8-4.5; salt 0.07-4.0; juice/mixture juices or extract of juice/mixture juices, or honey - 1.0-3.0.

### DISCLOSURE OF THE GROUP OF INVENTIONS

The object of this group of inventions is to eliminate the disadvantages of the prior art, the development of the snack product that is not capable of harming the health of the consumer, as well as expanding a range of the bakery products.

The present invention provides a method for the manufacture of extruded whole grain chips according to claim 1 and extruded whole grain chips according to claim 7. Further developments of the claims are defined in the dependent claims.

The technical result of the claimed group of inventions consists in the implementation of the said product and the method for manufacturing thereof, as a result of which a new snack product being distinguished by its taste quality is obtained, which is intended for direct consumption as an additional source of fiber, mineral substances and vitamins.

The said technical result is achieved by a method for the manufacture of extruded whole grain chips, including the use of rice grits, corn grits, water, a flavouring additive, the flavouring additive including sunflower oil and/or olive oil, a rosemary extract and natural seasoning. The method includes treating the rice and corn grits by purifying them from impurities and subsequent moistening with water; extruding the finished mixture of the grits with simultaneous baking and briquetting with double pressing; applying the flavouring additive on the surface of the chips by spraying. The components for manufacturing of the whole grain chips are taken in the following ratio of the components, wt. %:

| | |
|---|---|
| - water | 5.0-10.0 |
| - rice grits | 30.0-44.0 |
| - corn grits | 30.0-44.0 |
| - sunflower oil and/or olive oil | 5.0-30.0 |
| - a rosemary extract | 0.005-0.02 |
| - natural seasoning | The rest. |

At the same time, in embodiments, the natural seasoning is selected from the group containing tomato and basil, cheese, nacho cheese, paprika and chili.

At the same time, in one of the embodiments of the invention, the composition of the chips includes additionally the leguminous crops selected from the group containing bean, lentils, pea, chickpea, amarantus, quinoa, or their mixtures in the amount of 10.0-15.0 wt. %.

At the same time, the ratio of the different kinds of leguminous crops in the mixture may be, for example, 1:1 or 1:2; 1:3; 1:4 etc.

At the same time, in embodiments, moistening the mixture of the grits is performed in the vertical mixers by feeding there a calculated quantity of water, triple mixing during 7 minutes with the purpose of uniform mixing and a uniform distribution of water with subsequent keeping during 1-6 hours for swelling, while moisture of the finished moistened mixture of the grits is 14.5-19.0%.

At the same time, in embodiments, extruding the moistened mixture of the grits is performed under pressure of 1,2·10⁷ Pa to 1,6·10⁷ Pa (120-160) bar between the press-forms heated up to the temperature of a top part of the stamp - 250-260° C and the temperature of a bottom part of the stamp - 260-280° C.

At the same time, in embodiments, at the step of applying the flavouring additive, the sunflower or olive oil is heated up in a separately standing tank with a water jacket to room temperature, it is fed by a pump or under gravity into a panning drum, where it is sprayed onto the surface of the chips using the nozzles, while the seasoning or other spices, along with the oil, are fed into the panning drum and they are applied on the chips, which have already been covered with oil.

### IMPLEMENTATION OF THE GROUP OF INVENTIONS

The uniqueness of the new product obtained by the claimed method (the whole grain chips) is that it is manufactured from the whole rice and corn grits, thereby the product has a high percentage (up to 60%) of the content of food fibers, and also, in one of the embodiments of the invention, it contains leguminous crops, which contain a lot of vegetable protein and vegetable fiber.

The product is a brittle product manufactured from the corn and rice grains with the addition of the flavouring mixture based on sunflower or olive oil with natural seasoning, with the possible addition of leguminous crops and (or) their mixtures, salt and protein powder. It is possible to add natural food flavours (flavouring substances - spices and condiments) to give a peculiar aroma and taste, it is possible to add natural food dyes to give a colour.

Extruding, which the treated (purified from impurities and moistened) grain is exposed to, is a complex physical and chemical process, which includes: thermal treating the product under pressure; a mechanochemical deformation of the product; an "explosion" of the product in a shock discharging front.

When extruded, the water in the grain boils at the high temperature, the grain bursts (swells) and, due to the high pressure, it is immediately formed into a briquette. As a result of thermal treating, the taste quality of the product is improved (a pleasant odour and taste), because various aromatic substances, etc. are formed, the enzyme activity to digest it increases significantly, the nutritional value of the product almost doubles.

Corn and rice enjoy an excellent reputation due to their nutritional value for the human nutrition. In addition, they also contain the coarse indigestible food fibers that help to remove toxins and slags from the body. The swollen rice grains have a beneficial effect on the intestinal peristalsis, normalize metabolism and they are the suppliers of the complex carbohydrates, which saturate and replenish the energy reserves for a long time. The product does not contain gluten, GMOs, artificial food dyes and flavours, preservation agents and it is a perfect supplement to nutrition.

The chips are manufactured in the form of the brittle light bars of various shapes. Depending on the technical peculiarities of the equipment, the shape of the product can be square, triangular, round (of different diameters), hearts-shaped or the product can have other shapes.

The product may contain vitamin or vitamin and mineral complexes (premixes).

The whole grain chips are covered with the flavouring additive on both sides.

The examples of the composition of specific products are given and the method manufacturing thereof is described in detail to serve evidence of the possibility of the implementation of the claimed invention.

### Example 1.

The whole grain corn-rice chips with paprika and chili.

| **The raw materials name** | **The raw materials consumption, in wt. %** |
|---|---|
| water | 5.00 |
| rice grits | 44.00 |
| corn grits | 30.00 |
| sunflower oil | 5.00 |
| a rosemary extract | 0.005 |
| natural seasoning with paprika and chili | 15.995 |
| Total | 100.00 |

### Example 2.

The whole grain corn-rice with nacho cheese.

| **The raw materials name** | **The raw materials consumption, in wt. %** |
|---|---|
| water | 10.00 |
| rice grits | 30.00 |
| corn grits | 44.00 |
| sunflower oil | 10.00 |
| a rosemary extract | 0.02 |
| natural seasoning with nacho cheese | 4.98 |
| Total | 100.00 |

### Example 3.

The whole grain corn-rice chips with cheese.

| **The raw materials name** | **The raw materials consumption, in wt. %** |
|---|---|
| water | 7.00 |
| rice grits | 40.00 |
| corn grits | 30.00 |
| sunflower oil | 15.00 |
| a rosemary extract | 0.01 |
| natural cheese seasoning | 7.99 |
| Total | 100.00 |

### Example 4.

The whole grain corn-rice chips with tomato and basil.

| **The raw materials name** | **The raw materials consumption, in wt. %** |
|---|---|
| water | 5.00 |
| rice grits | 44.00 |
| corn grits | 44.00 |
| sunflower oil | 5.00 |
| a rosemary extract | 0.01 |
| natural seasoning with tomato and basil | 1.99 |
| Total | 100.00 |

### Example 5.

The whole grain corn-rice chips with olive oil and rosemary.

| **The raw materials name** | **The raw materials consumption,** |
|---|---|
| | **in wt. %** |
| water | 5.00 |
| rice grits | 30.00 |
| corn grits | 32.00 |
| olive oil | 30.00 |
| a rosemary extract | 0.005 |
| natural seasoning with olive oil and rosemary | 2.995 |
| Total | 100.00 |

### Example 6.

The whole grain corn-rice chips with pea.

| **The raw materials name** | **The raw materials consumption, in wt. %** |
|---|---|
| water | 5.00 |
| rice grits | 30.00 |
| corn grits | 30.00 |
| pea | 15.00 |
| olive oil | 15.00 |
| a rosemary extract | 0.01 |
| natural seasoning with salt and rosemary | 3.99 |
| protein powder | 1.00 |
| Total | 100.00 |

### Example 7.

The whole grain corn-rice chips with bean.

| **The raw materials name** | **The raw materials consumption, in wt. %** |
|---|---|
| water | 5.00 |
| rice grits | 30.00 |
| corn grits | 30.00 |
| bean | 10.00 |
| olive oil | 15.00 |
| a rosemary extract | 0.01 |
| natural seasoning with salt and rosemary | 4.99 |
| protein powder | 5.00 |
| Total | 100.00 |

### Example 8.

The whole grain corn-rice chips with chickpea and quinoa.

| **The raw materials name** | **The raw materials consumption, in wt. %** |
|---|---|
| water | 5.00 |
| rice grits | 30.00 |
| corn grits | 30.00 |
| chickpea | 5.00 |
| quinoa | 5.00 |
| olive oil | 15.00 |
| a rosemary extract | 0.01 |
| natural seasoning with salt and rosemary | 4.99 |
| protein powder | 5.00 |
| Total | 100.00 |

The method for manufacturing of the product involves the following steps:
- treating the raw materials;
- composing the mixture;
- extruding and briquetting;
- applying the flavouring additive;
- packaging and labelling the product.

### Treating the raw materials.

Treating the raw materials involves the following operations:
- screening the grain;
- washing the grain;
- moistening.

### Screening.

The corn and rice grits, and the leguminous crops, if they are envisaged by the recipe, are screened with the purpose of removal of the impurities differing from the grits by the width, thickness and the aerodynamic properties. The raw materials are passed through the grain purification unit BSH-1 or Almaz (it is possible to use the separators of other brands and other manufacturers) with the magnetic detectors and the sieves with the different diameters of the cells, depending on the kind of the grits.

### Washing.

The corn and rice grits, and the leguminous crops are washed separately, if they are envisaged by the recipe, at the wash machine KVD-1 (it is possible to use the wash machine of another brand and another manufacturer), intended for clearing a surface of grits and leguminous crops, if they are envisaged by the recipe, and separating them from the impurities differing by the hydrodynamic properties.

### Moistening.

Moistening is an important technological operation that influence on the quality of the finished product. Moistening the grits is performed in mixers, both of the vertical and horizontal types. The amount of the water required for moistening depends on the kind of the grits and their initial moisture, and it is 2.8-3.5% of the weight of the loadable grits. Moisture of the treated raw materials should be 14.5-19%.

Moisture occurs by loading the corn and rice grits into the mixer, feeding there the calculated amount of water, triple mixing during 7 minutes with the purpose of uniform mixing and a uniform distribution of water with subsequent keeping during 30-60 hours for the grits swelling.

After the end of the process of moistening, the corn and rice grits should be kept during 1-6 hours, depending on the quality of the used grits.

### Composing the mixture.

The mixture of the grits is composed from the treated raw materials according to the approved recipes, depending on the kind of the product.

### Extruding and briquetting.

The manufacture of the product is performed at a special equipment and it involves extruding the mixture of the grits and simultaneous baking and briquetting with double pressing the obtained product. The technological parameters at this step are the temperature of the top and bottom stamps and the heating-up time. These parameters depend on the processable mixture of the grits and are:
The temperature of the top part of the stamp is 250-260° C;
The temperature of the bottom part of the stamp is 260-280° C;
The time of baking is 6-8 seconds;
The pressure is 1,2·10⁷ Pa to 1,6·10⁷ Pa (120-160 bar).

Applying the flavouring additive from the vegetable oil and the natural seasoning on the whole grain chips.

The vegetable oil (high oleic sunflower or olive oil) is heated up in the separately standing tank with the water jacket to room temperature, and it is fed by the pump or under gravity into the panning drum, where it is sprayed onto the surface of the chips using the nozzles. The seasoning or other spices, along with the oil, are fed into the panning drum and they are applied on the chips, which have already been covered with oil.

This is followed by the steps of packaging and labeling, transporting and storing.

The given examples of a specific implementation allow determining an optimal ratio of the components for the whole grain chips and obtaining a wholesome product with the high organoleptic characteristics of quality and with a high nutritional value suitable for functional nutrition.

## Claims

1. A method for the manufacture of extruded whole grain chips, including the use of rice grits, corn grits, water and a flavouring additive which includes sunflower oil and/or olive oil, a rosemary extract and natural seasoning; treating the rice and corn grits by purifying them from impurities and subsequent moistening with water; extruding the finished mixture of the grits with simultaneous baking and briquetting with double pressing; applying the flavouring additive on the surface of the chips by spraying, the raw components for the manufacture of the chips being taken in the following ratio, wt. %:
| | | |
|---|---|---|
| - | water | 5.0-10.0 |
| - | rice grits | 30.0-44.0 |
| - | corn grits | 30.0-44.0 |
| - | sunflower oil and/or olive oil | 5.0-30.0 |
| - | a rosemary extract | 0.005-0.02 |
| - | natural seasoning | The rest. |

2. The method of claim 1, wherein the natural seasoning is selected from the group containing tomato and basil, cheese, nacho cheese, paprika and chili.

3. The method of claim 1, wherein the composition of the chips includes additionally the leguminous crops selected from the group containing bean, lentils, pea, chickpea, amarantus, quinoa, or their mixtures in the amount of 10.0-15.0 wt. %.

4. The method of claim 1, wherein moistening the mixture of the grits is performed in the vertical mixers by feeding there the calculated quantity of water, triple mixing during 7 minutes with the purpose of uniform mixing and a uniform distribution of water with subsequent keeping during 1-6 hours for swelling, while moisture of the finished moistened mixture of the grits is 14.5-19.0%.

5. The method of claim 1, wherein extruding the moistened mixture of the grits is performed under pressure of 1,2·10⁷ to 1,6·10⁷ Pa (120-160 bar) between the press-forms heated up to the temperature of the top part of the stamp - 250-260° C and the temperature of the bottom part of the stamp - 260-280° C.

6. The method of claim 1, wherein, at the step of applying the flavouring additive, the sunflower or olive oil is heated up in the separately standing tank with the water jacket to room temperature, it is fed by the pump or under gravity into the panning drum, where it is sprayed onto the surface of the chips using the nozzles, while the seasoning or other spices, along with the oil, are fed into the panning drum and they are applied on the chips, which have already been covered with oil.

7. Extruded whole grain chips manufactured according to the method of one of claims 1 to 6, the extruded whole grain chips containing rice grits, corn grits, water, a flavouring additive, wherein the flavouring additive includes sunflower oil and/or olive oil, a rosemary extract and natural seasonings in the following ratio of the raw components, wt. %:
| | | |
|---|---|---|
| - | water | 5.0-10.0 |
| - | rice grits | 30.0-44.0 |
| - | corn grits | 30.0-44.0 |
| - | sunflower oil and/or olive oil | 5.0-30.0 |
| - | a rosemary extract | 0.005-0.02 |
| - | natural seasoning | The rest. |

8. The extruded whole grain chips of claim 7, wherein the natural seasoning is selected from the group containing tomato and basil, cheese, nacho cheese, paprika and chili.

9. The extruded whole grain chips of one of claims 7 and 8, wherein it includes additionally the leguminous crops selected from the group containing bean, lentils, pea, chickpea, amarantus, quinoa, or their mixtures in the amount of 10.0-15.0 wt. %.

## Patentansprüche

1. Ein Verfahren zur Herstellung von extrudierten Vollkornchips, das die Verwendung von Reiskörnern, Maiskörnern, Wasser und einem Aromazusatzstoff, der Sonnenblumenöl und/oder Olivenöl, einen Rosmarinextrakt und natürliche Würze enthält; Behandeln der Reis- und Maiskörner durch Säubern derselben von Verunreinigungen und anschließendes Befeuchten mit Wasser; Extrudieren der fertigen Körnermischung bei gleichzeitigem Backen und Brikettieren mit doppelter Pressung; Aufbringen des Aromazusatzstoffes auf die Oberfläche der Chips durch Besprühen, wobei die Rohkomponenten für die Herstellung der Chip im folgenden Verhältnis, Gew. % verwendet werden:
| | | |
|---|---|---|
| - | Wasser | 5,0-10,0 |
| - | Reiskörner | 30,0-44,0 |
| - | Maiskörner | 30,0-44,0 |
| - | Sonnenblumenöl und/oder Olivenöl | 5,0-30,0 |
| - | ein Rosmarinextrakt | 0,005-0,02 |
| - | natürliche Würze | Der Rest. |

2. Das Verfahren gemäß Anspruch 1, bei dem die natürliche Würze aus der Gruppe ausgewählt ist, die Tomate und Basilikum, Käse, Nacho-Käse, Paprika und Chili enthält.

3. Das Verfahren gemäß Anspruch 1, bei dem die Zusammensetzung der Chips zusätzlich die Hülsenfrüchte enthält, die aus der Gruppe ausgewählt sind, die Bohnen, Linsen, Erbsen, Kichererbsen, Amarant, Quinoa oder deren Mischungen in einer Menge von 10,0-15,0 Gew. % enthält.

4. Das Verfahren gemäß Anspruch 1, bei dem das Befeuchten der Körnermischung in den Vertikalmischern durch Zuführen der berechneten Wassermenge, durch dreifaches Mischen für sieben Minuten mit dem Ziel des gleichmäßigen Vermischens und einer gleichmäßigen Verteilung des Wassers mit anschließendem Halten für 1-6 Stunden zum Quellen durchgeführt wird, wobei die Feuchtigkeit der fertigen befeuchteten Körnermischung 14,5-19,0 % beträgt.

5. Das Verfahren gemäß Anspruch 1, bei dem das Extrudieren der befeuchteten Körnermischung unter einem Druck von 1,2·10⁷ bis 1,6·10⁷ Pa (120-160 Bar) zwischen den Pressformen durchgeführt wird, die auf eine Temperatur von 250-260 °C des oberen Teils der Presse und auf eine Temperatur von 260-280 °C des unteren Teils der Presse erhitzt werden.

6. Das Verfahren gemäß Anspruch 1, bei dem das Sonnenblumen- oder Olivenöl bei dem Schritt des Aufbringens des Aromazusatzstoffes in dem separat stehenden Behälter mit dem Wassermantel auf Raumtemperatur erwärmt wird, dasselbe durch die Pumpe oder durch Schwerkraft in die Schwenktrommel geleitet wird, wo dasselbe unter Verwendung der Düsen auf die Oberfläche der Chips gesprüht wird, während die Würze oder andere Gewürze zusammen mit dem Öl in die Schwenktrommel geleitet werden und auf die Chips aufgebracht werden, die bereits mit Öl bedeckt wurden.

7. Extrudierte Vollkornchips, die gemäß dem Verfahren gemäß einem der Ansprüche 1 bis 6 hergestellt sind, wobei die extrudierten Vollkornchips Reiskörner, Maiskörner, Wasser, einen Aromazusatzstoff, wobei der Aromazusatzstoff Sonnenblumenöl und/oder Olivenöl enthält, einen Rosmarinextrakt und natürliche Würze im folgenden Verhältnis der Rohkomponenten, Gew. %, enthalten:
| | | |
|---|---|---|
| - | Wasser | 5,0-10,0 |
| - | Reiskörner | 30,0-44,0 |
| - | Maiskörner | 30,0-44,0 |
| - | Sonnenblumenöl und/oder Olivenöl | 5,0-30,0 |
| - | ein Rosmarinextrakt | 0,005-0,02 |
| - | natürliche Würze | Der Rest. |

8. Die extrudierten Vollkornchips gemäß Anspruch 7, bei denen die natürliche Würze aus der Gruppe ausgewählt ist, die Tomate und Basilikum, Käse, Nacho-Käse, Paprika und Chili enthält.

9. Die extrudierten Vollkornchips gemäß einem der Ansprüche 7 und 8, wobei dieselben zusätzlich die Hülsenfrüchte, ausgewählt aus der Gruppe, die Bohnen, Linsen, Erbsen, Kichererbsen, Amarant, Quinoa oder deren Mischungen enthält, in der Menge von 10,0-15,0 Gew. % enthalten.

## Revendications

1. Procédé de fabrication de puces de grains entiers extrudées, comportant l'utilisation de grains de riz, de grains de maïs, d'eau et d'un additif aromatisant qui comporte de l'huile de tournesol et/ou de l'huile d'olive, d'un extrait de romarin et d'un assaisonnement naturel; le fait de traiter les grains de riz et de maïs en les purifiant des impuretés et en les humidifiant ensuite avec de l'eau; d'extruder le mélange fini des grains en les cuisant et briquetant simultanément par double pressage; d'appliquer l'additif aromatisant sur la surface des puces par pulvérisation, les composants bruts pour la fabrication des puces étant pris selon le rapport suivant, en % en poids:
| | | |
|---|---|---|
| - | eau | 5.0 à 10.0 |
| - | grains de riz | 30.0 à 44.0 |
| - | grains de maïs | 30.0 à 44.0 |
| - | huile de tournesol et/ou huile d'olive | 5.0 à 30.0 |
| - | un extrait de romarin | 0.005 à 0.22 |
| - | assaisonnement naturel | le reste. |

2. Procédé selon la revendication 1, dans lequel l'assaisonnement naturel est sélectionné parmi le groupe contenant de la tomate et du basilic, du fromage, du fromage nacho, du paprika et du piment.

3. Procédé selon la revendication 1, dans lequel la composition des puces comporte par ailleurs les légumineuses sélectionnées parmi le groupe contenant des haricots, des lentilles, des pois, des pois chiches, des amarantes, du quinoa ou leurs mélanges en une quantité de 10.0 à 15.0 en % en poids.

4. Procédé selon la revendication 1, dans lequel l'humidification du mélange des grains est effectuée dans les mélangeurs verticaux en y alimentant la quantité d'eau calculée, par triple mélange pendant 7 minutes aux fins d'un mélange uniforme et d'une distribution uniforme de l'eau avec maintien ultérieur pendant de 1 à 6 heures pour le gonflement, tandis que l'humidité du mélange humidifié fini des grains est de 14.5 à 19.0%.

5. Procédé selon la revendication 1, dans lequel l'extrusion du mélange humidifié des grains est effectuée sous une pression de 1,2·10⁷ à 1,6·10⁷ Pa (120 à 160 bars) entre les formes de presse chauffées jusqu'à la température de la partie supérieure du poinçon - 250 à 260° C et la température de la partie inférieure du poinçon - 260 à 280° C.

6. Procédé selon la revendication 1, dans lequel, à l'étape consistant à appliquer l'additif aromatisant, l'huile de tournesol ou d'olive est réchauffée dans le réservoir disposé de manière séparée par la chemise d'eau à température ambiante, elle est alimentée par la pompe ou par gravité vers le tambour de lavage à la batée, où elle est pulvérisée sur la surface des puces à l'aide des buses, tandis que l'assaisonnement ou d'autres épices, ensemble avec l'huile, sont introduits dans le tambour de lavage à la batée et ils sont appliqués sur les puces qui ont déjà été recouvertes d'huile.

7. Puces de grains entiers extrudées fabriquées selon le procédé selon l'une des revendications 1 à 6, les puces de grains entiers extrudées contenant des grains de riz, des grains de maïs, de l'eau un additif aromatisant, où l'additif aromatisant comporte de l'huile de tournesol et/ou de l'huile d'olive, un extrait de romarin et des assaisonnements naturels selon le rapport suivant des composants bruts, en % en poids:
| | | |
|---|---|---|
| - | eau | 5.0 à 10.0 |
| - | grains de riz | 30.0 à 44.0 |
| - | grains de maïs | 30.0 à 44.0 |
| - | huile de tournesol et/ou huile d'olive | 5.0 à 30.0 |
| - | un extrait de romarin | 0.005 à 0.22 |
| - | assaisonnement naturel | le reste. |

8. Puces de grains entiers extrudées selon la revendication 7, dans lesquelles l'assaisonnement naturel est sélectionné parmi le groupe contenant de la tomate et du basilic, du fromage, du fromage nacho, du paprika et du piment.

9. Puces de grains entiers extrudées selon l'une des revendications 7 et 8, dans lesquelles elles comportent par ailleurs les légumineuses sélectionnées parmi le groupe contenant des haricots, des lentilles, des pois, des pois chiches, des amarantes, du quinoa ou leurs mélanges en une quantité de 10.0 à 15.0 en % en poids.
